# FASCICULE DE BREVET EUROPEEN

(11) **EP 0 751 204 B1**
(45) Date de publication et mention de la délivrance du brevet: **26.09.2001**
(21) Numéro de dépôt: 96401381.7
(22) Date de dépôt: 21.06.1996
(51) Int. Cl.: C10G 45/52

(54) **Procédé d'hydrogénation d'aromatiques avec injection de chlore sur des catalyseurs à base de métal noble**
Verfahren zur Hydrierung von Aromaten mit Chlor-Einspritzung auf Edelmetallkatalysatoren
Process for the hydrogénation of aromatics with chlorine injection on noble metal based catalysts

(30) Priorité: 27.06.1995 FR 9507726
(43) Date de publication de la demande: 02.01.1997
(73) Titulaire: INSTITUT FRANCAIS DU PETROLE, 92502 Rueil-Malmaison (FR)
(72) Inventeur: Mignard, Samuel, 78400 Chatou (FR); Harle, Virginie, 92500 Rueil Malmaison (FR); Kasztelan, Slavik, 92500 Rueil Malmaison (FR); Marchal-George, Nathalie, 75005 Paris (FR)

(56) Documents cités:
- US-A- 3 639 227
- US-A- 3 816 299

## Description

L'invention concerne un procédé d'hydrogénation d'aromatiques en présence d'un catalyseur à base de métal noble et en présence de chlore et de fluor.
Dans le futur, des spécifications concernant la teneur en aromatiques dans les gas-oils seront mises en place.
Aujourd'hui, les unités destinées à assurer la désulfuration de ce type de charge ne sont pas capables d'assurer également l'hydrogénation des aromatiques de façon satisfaisante.
Il est donc très probable que dans le futur, de nouveaux types d'unités verront le jour avec pour but de non seulement de réaliser la désulfuration profonde mais également l'hydrogénation poussée des aromatiques.
Ces nouvelles unités pourront être constituées de deux zones réactionnelles. La première zone réactionnelle (qui peut correspondre à un réacteur) aura pour but d'abaisser la teneur en soufre à une faible valeur. Ensuite, la deuxième zone réactionnelle aura pour but d'hydrogéner les aromatiques présents dans les effluents de la première zone. Les meilleurs catalyseurs d'hydrogénation des aromatiques sont des catalyseurs à base de métaux nobles. Malheureusement, les catalyseurs à base de métal noble sont, la plupart du temps, extrêmement sensibles à la présence de soufre.

Les travaux de recherche effectués par la demanderesse l'ont conduit à explorer la possibilité d'ajout de chlore à une charge éventuellement préalablement désulfurée pour augmenter l'activité hydrogénante du catalyseur. L'injection de chlore peut être continue ou non suivant le niveau d'activité souhaité.

Les brevets US-3,639,227 et US-3,816,299 décrivent des procédés d'hydrogénation de composés aromatiques en présence de chlore.

Dans le brevet US-3,816,299, du tétrachlorure de carbone est ajouté dans la zone d'hydrogénation, à raison de 0,01-1 % vol. (en équivalent HCl) par rapport à la totalité de la phase gazeuse. La zone contient un catalyseur à base de métal noble, et opère entre 93 et 538 °C, sous 1-300 atm. Dans les charges traitées les composés aromatiques sont essentiellement monocycliques, et ce sont donc des kérosènes principalement. Les exemples comparatifs III-VI démontrent que ce procédé fonctionne très mal lorsque des composés organiques chlorés tels que HCl,C₃H₇Cl et CH₂Cl₂ sont employés au lieu de CCl₄.

Le brevet US-3,639,227 montre également que l'ajout de chlore dans une zone d'hydrogénation améliore le rendement de la réaction, en présence d'un catalyseur contenant un métal noble et environ 0,3 % de chlore, mais ne contenant pas de fluor. Les quantités de chlore ajoutées, notamment par l'emploi de C₃H6Cl₂, sont de près de 0,6 %. Les charges pouvant être traitées sont des kérosènes ou esssences contenant au plus 0,5 % poids de soufre.

La demanderesse a recherché à améliorer les procédés d'hydrogénation des aromatiques pour permettre l'emploi d'agent chlorant autre que CCl₄ et pour pouvoir traiter des coupes plus lourdes que les kérosènes contenant des composés aromatiques essentiellement polycycliques.

Le procédé d'hydrogénation des aromatiques selon l'invention a lieu en présence d'un catalyseur supporté à base d'au moins un métal noble et contenant du chlore et du fluor, à raison d'au moins 1 % poids d'au moins un halogène, à une température de 200-450°C, une pression de 1-25MPa, avec une VVH de 0.1-10h⁻¹ et un taux volumique hydrogène/charge de 100-2.000, et il se déroule en présence de chlore injecté dans la zone d'hydrogénation, à raison de 0,5-500 ppm poids par rapport à la charge.

La charge traitée présente un point d'ébullition initial supérieur à 100 °C, avantageusement d'au moins 150 °C et de préférence d'au moins 200 °C. Ce peut être un kérosène, un gazole ou une charge plus lourde par exemple une coupe 380-550 °C.

La teneur pondérale en aromatiques de la charge est d'au moins 10 %, de préférence 20 %. Les composés aromatiques ont de préférence 1 à 6 cycles, voire 1 à 4. Les coupes 200 °C + présentent des composés aromatiques essentiellement polycycliques (2-6 cycles ou 2-4 cycles).

La charge contient 5-2.000ppm en poids de soufre et de préférence 50-800ppm. De façon préférée, la charge est un gazole atmosphérique issu du craquage catalytique ou un distillat sous vide déjà traité auquel on souhaite donner des caractéristiques alimentaires.

Le chlore est injecté par exemple sous forme de composé organique sur le catalyseur de façon à augmenter son activité hydrogénante. La teneur en chlore injecté dans le réacteur est de préférence de 0,5-150 ppm, est comprise avantageusement entre 5-70 ppm. L'injection peut être effectué à tout endroit de l'unité du moment que le chlore ou le composé chloré passe sur le catalyseur. De façon préférée, elle est effectuée dans la charge. Cette injection peut être continue ou discontinue. Si elle est continue, la teneur en chlore injecté peut être faible. Si elle est en discontinue, le but est d'injecter le chlore à une teneur relativement élevée pendant un temps tel que l'activité hydrogénante désirée est atteinte. Ensuite, on arrête l'injection de chlore ce qui se traduit par une baisse d'activité. Lorsque le taux minimum d'activité est atteint, on réinjecte le chlore jusqu'à retrouver l'activité voulue et ainsi de suite.
Le composé chloré est par exemple le dichlorométhane, le trichlorométhane, le dichloroéthane, le trichloroéthane, le tétrachloroéthylène, l'hexachloroéthane, le chloroforme...

De façon préférée, le catalyseur ne contient qu'un seul métal noble. De façon encore plus préférée, le métal noble est du platine. Le métal noble est déposé sur un support de grande surface (supérieure à 100m²/g). Celui-ci peut être constitué d'alumine, de silice, de silice-alumine, de zéolithe ou de toute combinaison de deux ou plusieurs de ces éléments. Ces supports ont subi un traitement préalable par halogénation de façon à ce que le catalyseur final contienne au moins 1 % poids d'au moins un halogène. De préférence, le catalyseur contient du chlore, et avantageusement du chlore et du fluor. De façon préférée, le support utilisé est une alumine chlorée et fluorée.
De façon préférée, la température de réaction est comprise entre 240°C et 350°C, la pression entre 1,5MPa (15bar) et 1MPa (100bar), la VVH entre 0.5h⁻¹ et 2h⁻¹ et le taux volumique hydrogène/charge entre 125 et 1000.

Les exemples présentés ci-après illustrent les caractéristiques de l'invention sans toutefois en limiter la portée.

### Exemple 1 : préparation d'un catalyseur Pt/alumine+Cl+F

La méthode utilisée consiste en une introduction successive des éléments par excès de solution. On introduit d'abord le chlore puis le fluor et enfin le platine. L'alumine utilisée est de type gamma-cubique. Cette alumine est traitée successivement avec une solution d'acide chlorhydrique à 2% en chlore pendant 30 minutes de façon à obtenir la bonne quantité de chlore sur le support. Après vidange de la solution, la solution d'acide fluorhydrique est mis en contact avec le support chloré pendant 1H30. Le support est ensuite rincé et l'imprégnation du platine est réalisée à l'aide d'acide hexachloroplatinique. Après 12 heures d'échange, le catalyseur est séché sous air sec pendant deux heures à 530°C. La composition du catalyseur est alors la suivante :

| | |
|---|---|
| Chlore | 0.98% poids |
| Fluor | 1.03% poids |
| Platine | 0.60% poids |

### Exemple 2: description des deux charges utilisées

Dans le tableau 1 suivant, nous avons reporté les caractéristiques de la charge de type LCO qui nous a servi à préparer deux charges désulfurées l'une ayant une teneur élevée en soufre (notée DLCO1) et l'autre avec une teneur faible en soufre (notée DLCO2).
On note une diminution de la densité à 20°C ainsi qu'une diminution de la teneur en soufre et en azote. Comme on peut le noter, la désulfuration du LCO n'est accompagnée que d'une hydrogénation limitée des aromatiques puisque le CA mesuré par RMN ne varie que faiblement ainsi que les teneurs en aromatiques mesurées par spectrométrie de masse.

**Tableau 1**

| Caractéristiques | Charge LCO | Charge DLCO1 | Charge DLCO2 |
|---|---|---|---|
| Densité à 20°C | 0.945 | 0.904 | 0.893 |
| Soufre (ppm) | 21800 | 109 | 9 |
| Azote (ppm) | 625 | 132 | 5 |
| D86 (°C) | | | |
| PI | 173 | 166 | 139 |
| 10% | 229 | 210 | 208 |
| 50% | 285 | 266 | 265 |
| 90% | 355 | 343 | 332 |
| PF | 423 | 415 | 400 |
| Aromatiques (%pds) | | | |
| Total | 80 | 74 | 69 |
| Mono | 17 | 44 | 48 |
| Di | 39 | 27 | 19 |
| Tri | 11 | 3 | 2 |
| CA par RMN | 55 | 43 | 36 |

### Exemple 3 : Description des conditions opératoires des tests catalytiques et des conditions d'activation des catalyseurs

Les catalyseurs dont la description est faite dans les exemples précédents sont ensuite évalués au cours d'un test catalytique dont les conditions opératoires du test catalytique sont les suivantes :

| | |
|---|---|
| Type de réacteur | up-flow |
| Pression totale | 60 bar |
| Rapport H₂/charge (l/l) | 450Nl/Nl |
| VVH | 1 h⁻¹ |
| Charge | voir exemple |
| Température | voir exemple |

Avant utilisation, le catalyseur doit être réduit. Pour cela, une fois introduit dans le réacteur, un courant d'hydrogène à 450°C pendant deux heures est passé sur le catalyseur. Cependant, une méthode de réduction ex-situ aurait le même effet.

### Exemple 4 : Comparaison de l'influence d'une même quantité de chlore sur une charge à teneur élevée en soufre et une charge à faible teneur en soufre

Nous avons évalué l'influence de l'ajout de chlore avec le catalyseur de l'exemple A (catalyseur de type Pt/alumine+Cl+F). Nous avons successivement mesuré les performances catalytique en utilisant d'une part la charge DLCO1 fortement soufrée et d'autre part la charge faiblement soufrée DLCO2. Ces deux charges sont décrites dans l'exemple 2.
Les résultats sont regroupés dans le tableau 2 suivant. Pour chaque expérience, nous avons mesuré la densité de l'effluent liquide à 20°C, la teneur en CA (Carbone Aromatique mesuré par RMN) de l'effluent et la teneur initiale CA₀ de la charge

**Tableau 2**

| | DLCO1 | | DLCO2 | |
|---|---|---|---|---|
| | sans ajout | avec ajout | sans ajout | avec ajout |
| Température (°C) | 280 | 280 | 250 | 250 |
| Chlore ajouté (ppm) | 0 | 50 | 0 | 50 |
| Densité à 20°C | 0.870 | 0.881 | 0.863 | 0.867 |
| CA charge initiale | 43 | | 36 | |
| CA effluent | 27.4 | 19.8 | 26.7 | 24.7 |
| %HDCA | 36.3 | 53.9 | 25.7 | 31.4 |
| Activité | 0.451 | 0.774 | 0.297 | 0.377 |
| Activité relative | 100 | 171 | 100 | 127 |

A partir du CA de la charge et du CA de l'effluent, nous avons calculé la conversion (% HDCA) puis l'activité hydrogénante en admettant qu'elle est d'un ordre 1. Il apparait que pour la même quantité de chlore ajoutée, le gain d'activité est d'autant plus élevé que la teneur en soufre de la charge est élevée.

## Revendications

1. Procédé d'hydrogénation des aromatiques d'une charge dont le point initial de distillation est supérieur à 100°C et qui contient au moins 10 % poids de composés aromatiques en présence d'un catalyseur supporté à base d'au moins un métal noble et contenant du chlore et du fluor à raison d'au moins 1% poids d'au moins un halogène, à une température de 200-450°C, une pression de 1-25MPa, avec une VVH de 0.1-10h⁻¹ et un taux volumique hydrogène/charge de 100-2.000, dans lequel le procédé se déroule en présence de chlore injecté dans la zone d'hydrogénation à raison de 0,5-500 ppm poids par rapport à la charge.

2. Procédé selon la revendication 1, dans lequel la température est de 240-350°C.

3. Procédé selon l'une des revendications précédentes, dans lequel le taux volumique hydrogène/charge est de 125-1000.

4. Procédé selon l'une des revendications précédentes, dans lequel la charge contient 5-2.000 ppm poids de soufre.

5. Procédé selon l'une des revendications précédentes, dans lequel la charge contient 50-800 ppm poids de soufre.

6. Procédé selon l'une des revendications précédentes, dans lequel les composés aromatiques de la charge contiennent essentiellement 2-6 cycles aromatiques.

7. Procédé selon l'une des revendications précédentes, dans lequel la charge présente un point d'ébullition initial d'au moins 200 °C.

8. Procédé selon l'une des revendications précédentes, dans lequel la charge est un gazole atmosphérique ou un distillat sous vide.

9. Procédé selon l'une des revendications précédentes, dans lequel l'on l'injecte un composé organique chloré choisi dans le groupe constitué par le dichlorométhane, le trichlorométhane, dichloroéthane, le trichloroéthane, le tétrachloroéthylène, l'hexachloroéthane, le chloroforme.

10. Procédé selon l'une des revendications précédentes, dans lequel le chlore est injecté dans la charge.

11. Procédé selon l'une des revendications précédentes, **caractérisé en ce que** le catalyseur contient un support chloré et fluoré.

12. Procédé selon l'une des revendications précédentes, **caractérisé en ce que** le catalyseur contient du platine déposé une alumine chlorée et fluorée.

13. Procédé selon l'une des revendications précédentes, **caractérisé en ce que** la quantité de chlore injectée est de 5-70 ppm poids par rapport à la charge.

## Patentansprüche

1. Verfahren zur Hydrierung von Aromaten einer Charge, deren Anfangsdestillationspunkt über 100°C liegt und die wenigstens 10 Gew.-% aromatischer Verbindugen enthält, in Gegenwart eines Katalysators auf einem Träger auf Basis von wenigstens einem Edelmetall und der Chlor und Fluor in einer Menge von wenigstens 1 Gew.-% wenigstens eines Halogens hat, bei einer Temperatur von 200-450°C, einem Druck von 1-25 MPa, mit einer VVH von 0.1-10h⁻¹ und einem Volumenverhältnis Wasserstoff/Charge von 100-2.000, wobei das Verfahren in Gegenwart von in einer Menge von 0,5-500 Gewichts-ppm bezüglich der Charge in die Hydrierungszone eingeführtem Chlor abläuft.

2. Verfahren nach Anspruch 1, wobei die Temperatur 240-350°C beträgt.

3. Verfahren nach einem der vorhergehenden Ansprüche, wobei das Volumenverhältnis Wasserstoff/Charge 125-1000 beträgt.

4. Verfahren nach einem der vorhergehenden Ansprüche, wobei die Charge 5-2.000 Gewichts-ppm Schwefel enthält.

5. Verfahren nach einem der vorhergehenden Ansprüche, wobei die Charge 50-800 Gewichts-ppm Schwefel enthält.

6. Verfahren nach einem der vorhergehenden Ansprüche, wobei die aromatischen Verbindungen der Charge im wesentlichen 2-6 aromatische Zyklen enthalten.

7. Verfahren nach einem der vorhergehenden Ansprüche, wobei die Charge einen Siedepunkt von wenigstens 200°C aufweist.

8. Verfahren nach einem der vorhergehenden Ansprüche, wobei die Charge ein Gasöl unter Atmosphärendruck oder ein Destillat unter Vakuum ist.

9. Verfahren nach einem der vorhergehenden Ansprüche, wobei eine chlorierte organische Verbindung eingeführt wird, die aus der durch Dichlormethan, Trichlormethan, Dichlorethan, Trichlorethan, Tetrachlorethylen, Hexachlorethan und Chloroform gebildeten Gruppe gewählt ist.

10. Verfahren nach einem der vorhergehenden Ansprüche, wobei Chlor in die Charge eingeführt wird.

11. Verfahren nach einem der vorhergehenden Ansprüche, **dadurch gekennzeichnet, dass** der Katalysator einen chlorierten und fluorierten Träger enthält.

12. Verfahren nach einem der vorhergehenden Ansprüche, **dadurch gekennzeichnet, dass** der Katalysator Platin abgeschieden auf einem chlorierten und fluorierten Aluminiumoxid enthält.

13. Verfahren nach einem der vorhergehenden Ansprüche, **dadurch gekennzeichnet, dass** die eingeführte Chlormenge 5-70 Gewichts-ppm im Verhältnis zur Charge ist.

## Claims

1. A process for the hydrogenation of aromatic compounds in a feed with an initial boiling point of more than 100C and which contains at least 10% by weight of aromatic compounds, in the presence of a supported catalyst based on at least one noble metal and containing chlorine and fluorine, in a quantity of at least 1% by weight of at least one halogen, at a temperature of 200-450C, a pressure of 1-25 MPa, at an HSV of 0.1-10 h⁻¹ and a hydrogen/feed volume ratio of 100-2000, in which the process is carried out in the presence of chlorine injected into the hydrogenation zone at a concentration of 0.5-500 ppm by weight with respect to the feed.

2. A process according to claim 1, in which temperature is between 240 and 350°C.

3. A process according to any one of the preceding claims, in which the hydrogen/feed volume ratio is in the range 125 to 1000.

4. A process according to claim 1, in which the feed contains 5-2000 ppm by weight of sulphur.

5. A process according to any one of the preceding claims, in which the feed contains 50-800 ppm by weight of sulphur.

6. A process according to any one of the preceding claims, in which the aromatic - compounds in the feed essentially contain 2-6 aromatic rings.

7. A process according to any one of the preceding claims, in which the feed has an initial boiling point of at least 200C.

8. A process according to any one of the preceding claims, in which the feed is an atmospheric gas oil or a vacuum distillate.

9. A process according to any one of the preceding claims, in which a chlorinated organic compound is injected which is selected from the group constituted by dichloromethane, trichloromethane, dichloroethane, trichloroethane, tetrachloroethylene, hexachloroethane, and chloroform.

10. A process according to any one of the preceding claims, in which the chlorine is injected into the feed.

11. A process according to any one of the preceding claims, **characterized in that** the catalyst contains a chlorinated and fluorinated support.

12. A process according to any one of the preceding claims, **characterized in that** the catalyst contains platinum deposited on a chlorinated and fluorinated alumina.

13. A process according to any one of the preceding claims, **characterized in that** the quantity of injected chlorine is 5-70 ppm weight with respect to the feed.
